# EUROPÄISCHE PATENTSCHRIFT

(11) **EP 1 114 746 B1**
(45) Veröffentlichungstag und Bekanntmachung des Hinweises auf die Patenterteilung: **07.12.2005**
(21) Anmeldenummer: 00127867.0
(22) Anmeldetag: 20.12.2000
(51) Int. Cl.: B60K 37/06

(54) **Vorrichtung für manuelle Eingaben in einem Fahrzeug und Verarbeitung von manuellen Eingaben in einem Fahrzeug**
Device for manual entries in a vehicle and treatment of manual entries
Dispositif d'entrée manuelle de données dans un véhicule et traitement des entrées manuelles

(30) Priorität: 05.01.2000 DE 10000218
(43) Veröffentlichungstag der Anmeldung: 11.07.2001
(73) Patentinhaber: ROBERT BOSCH GMBH, 70442 Stuttgart (DE)
(72) Erfinder: Pöchmüller, Werner, 31139 Hildesheim (DE)

(56) Entgegenhaltungen:
- DE-A- 19 813 300
- US-A- 5 128 671
- US-A- 5 563 632

## Beschreibung

### Stand der Technik

Die Erfindung geht aus von einer Vorrichtung für manuelle Eingaben in einem Fahrzeug bzw. von einem Verfahren zur Verarbeitung von manuellen Eingaben in einem Fahrzeug nach der Gattung der unabhängigen Patentansprüche.

Es ist bereits bekannt, durch manuelle Eingaben mittels Eingabevorrichtung in einem Fahrzeug Geräte zu steuern, wobei die manuellen Eingaben von einem Prozessor zunächst verarbeitet werden, um dann die Geräte zu steuern. Bei Tipptasten ist das Konzept der Entprellung bekannt, um Fehleingaben zu vermeiden.

Da in einem Fahrzeug passive Sicherheitseinrichtungen wie Airbag und Gurtstraffer bereits eingesetzt werden, sind dafür Beschleunigungs- und Drehratensensoren vorhanden, um diese Sicherheitseinrichtungen auszulösen, falls eine Notfallsituation eintritt.

Aus US-A-5,128,671 ist es bereits bekannt, bei einem Joystick in einem Flugzeug die auf den Joystick insgesamt ausgeübte Beschleunigung dadurch zu korrigieren, dass davon die gemessene Beschleunigung durch Beschleunigungssensoren abgezogen wird um die ausgeübte Beschleunigung auf den Joystick zu bestimmen. Diese Schrift offenbart eine Vorrichtung nach dem Oberbegriff des Anspruchs 1.

Vorteile der Erfindung

Die erfindungsgemäße Vorrichtung für manuelle Eingaben in einem Fahrzeug nach Anspruch 1 bzw. das erfindungsgemäße Verfahren zur Verarbeitung von manuellen Eingaben in einem Fahrzeug nach Anspruch 4 haben demgegenüber den Vorteil, daß der Eingabevorgang erheblich vereinfacht wird, da die Eingaben in Abhängigkeit von den Sensorwerten der Beschleunigungs- bzw. Drehratensensoren korrigiert werden und so Fehleingaben stark reduziert werden. Dies vereinfacht erheblich die Bedienung von Geräten in einem Fahrzeug, da der Benutzer nicht darauf achten muß, selbst auftretende Kräfte zu kompensieren. Dies wird nun vorteilhafterweise von dem Prozessor durchgeführt, da er mittels der Sensorwerte die manuellen Eingaben korrigiert, wobei
der Prozessor der erfindungsgemäßen Vorrichtung die Meßwerte der Sensoren mit Schwellwerten vergleicht und in Abhängigkeit, welche Schwellwerte überschritten werden, Korrekturen der manuellen Eingaben durchführt. Dadurch wird in einfacher Weise eine Korrektur durchgeführt, wobei auf abgespeicherte Daten zurückgegriffen wird.

Durch die in den abhängigen Ansprüchen aufgeführten Maßnahmen und Weiterbildungen sind vorteilhafte Verbesserungen der bzw. des in den unabhängigen Patentansprüchen angegebenen Vorrichtung bzw. Verfahrens möglich.

Die Eingabevorrichtung weist vorteilhafterweise mindestens ein Bedienelement auf, das auf Druck- und/oder Drehund/oder Führbewegungen reagiert. Damit werden einfache und fein abstufbare Eingaben, um Geräte zu steuern, möglich. Bedienelemente, die auf solche Bewegungen reagieren, werden haptische Bedienelemente genannt.

### Zeichnung

Ausführungsbeispiele der Erfindung sind in der Zeichnung dargestellt und in der nachfolgenden Beschreibung näher erläutert. Figur 1 zeigt eine erfindungsgemäße Vorrichtung für manuelle Eingaben in einem Fahrzeug. Figur 2 zeigt das erfindungsgemäße Verfahren zur Verarbeitung von manuellen Eingaben in einem Fahrzeug und Figur 3 zeigt die erfindungsgemäße Vorrichtung für manuelle Eingaben in einem Fahrzeug, wobei die Komponenten der erfindungsgemäßen Vorrichtung über einen Bus verbunden sind.

### Beschreibung

Die Bedienung von haptischen Bedienelementen in einem Fahrzeug leidet unter Kräften, die durch die Bewegung des Fahrzeugs hervorgerufen werden. Ein Benutzer ist daher gezwungen, selbst diese Kräfte zu kompensieren, um korrekte manuelle Eingaben durchzuführen, so daß die Eingabevorrichtung korrekte Eingabesignale generiert. Eine Bedienung ist daher schwierig und fehleranfällig. Haptische Bedienelemente sind jedoch notwendig, um fein abgestufte Eingaben durchzuführen. Mittels Spracheingabe ist dies nur schwer oder gar nicht möglich.

Erfindungsgemäß werden daher die Kräfte in einem Fahrzeug mittels Sensoren gemessen, um dann die Eingabesignale von einer Eingabevorrichtung entsprechend der gemessenen Kräfte zu korrigieren.

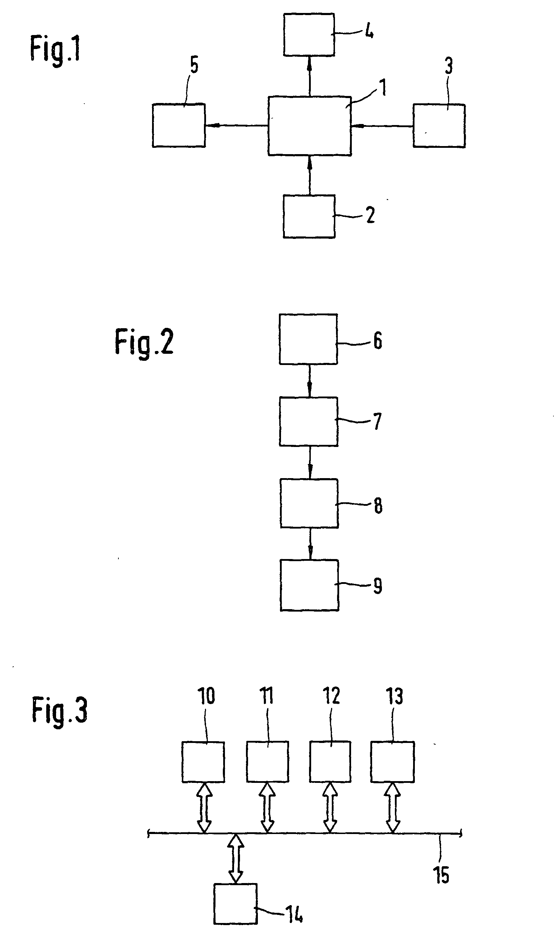

In Figur 1 ist die erfindungsgemäße Vorrichtung für manuelle Eingaben in einem Fahrzeug dargestellt. Ein Prozessor 1 ist über einen ersten Dateneingang mit einer Eingabevorrichtung 2 verbunden. Über einen zweiten Dateneingang ist an den Prozessor 1 eine Sensorengruppe 3 angeschlossen. Über einen ersten Datenausgang des Prozessors 1 sind Aktoren 4 angeschlossen. Über einen zweiten Datenausgang des Prozessors 1 ist eine Anzeige 5 angeschlossen.

Die Eingabevorrichtung 2 weist angeschlossene Elektronik auf, die manuelle Eingaben in elektrische Signale umwandelt und digitalisiert. Die digitalisierten Signale werden dann an den Prozessor 1 übertragen. Als Eingabevorrichtung 2 ist hier eine Tastatur vorhanden. Alternativ können auch andere haptische Bedienelemente anstatt der Tastatur oder gleichzeitig verwendet werden. Dazu zählen Bedienelemente, die haptische Bedienelemente sind, d.h. die reagieren auf Druck- und/oder Dreh- und oder Führbewegungen. Dazu gehören Tipptasten, Tastenwippen, Drehgeber, Druckdrehgeber, Joysticks und eine Computermaus.

Auch die Sensorengruppe 3 weist eine angeschlossene Elektronik auf, die die Sensorsignale verstärkt und digitalisiert, so daß dann digitalisierte Sensorsignale zum Prozessor 1 übertragen werden. Die Sensorengruppe 3 weist Beschleunigungssensoren und/oder Drehratensensoren auf. Beschleunigungssensoren weisen üblicherweise ein FederMasse-System auf, wobei dann eine Kapazitätsänderung elektrisch gemessen wird und diese Kapazitätsänderung die Beschleunigung repräsentiert. Bei einem Drehratensensor wird eine Winkelbeschleunigung gemessen, wobei auch hier Beschleunigungssensoren verwendet werden. Die Sensorengruppe 3 liegt entweder bereits für Messungen für andere Einrichtungen wie Airbag oder Gurtstraffer vor, oder die Sensorgruppe 3 wird für die erfindungsgemäße Vorrichtung hinzugefügt.

Der Prozessor 1 vergleicht die digitalisierten Meßwerte der Sensorengruppe 3 mit abgespeicherten Schwellwerten. In Abhängigkeit, welche Schwellwerte übertroffen wurden, korrigiert der Prozessor 1 die digitalisierten Eingabesignale der Eingabevorrichtung 2. Es liegen damit im voraus abgespeicherte Korrekturwerte vor, die auch auf Messungen beruhen. Die Schwellwerte sind vorgegeben, abgespeichert und basieren auf Tests und/oder auf Berechnungen. Wird selbst der niedrigste Schwellwert nicht übertroffen, wird keine Korrektur der Eingabesignale, die von der Eingabevorrichtung 2 zu dem Prozessor 1 übertragen werden, vorgenommen.

Alternativ kann aus den digitalisierten Meßwerten eine Korrektur berechnet werden, wobei je nach Ausführung der Eingabevorrichtung Modelle abgespeichert sind, die der Prozessor 1 benutzt, um Korrekturwerte für die digitalisierten Eingabesignale zu berechnen. Solche Modelle beschreiben ein mechanisches Hand-Bedienelement-Modell, wobei entsprechend der erfaßten Sensorwerte und der erzeugten Eingabesignale die ursprünglich beabsichtigte Bedienung bezüglich Richtung und Krafteinsatz geschätzt wird. Die korrigierten Eingabesignale werden dann von dem Prozessor 1 ausgewertet, um die Aktoren 4 entsprechend dieser Eingabesignale zu steuern und/oder auf einer Anzeige 5 Informationen gemäß der Eingabesignale darzustellen.

Der Prozessor 1 weist Speicher auf, um die Schwellwerte, Korrekturwerte und Modelle abzuspeichern. Dieser Speicher wird auch als Zwischenspeicher verwendet.

Die Aktoren 4 umfassen Stellglieder, die Bremse, Kopfstützen, Fensterheber, Spiegel, Scheibenwischer, Navigationsgerät, Autoradio, Mobiltelefon und Computer. Bei all diesen Geräten sind haptische Eingaben notwendig, um entsprechende Einstellungen vorzunehmen. Insbesondere bei einem Computer sind besonders feinfühlige Eingaben vorzunehmen, um beispielsweise bei einer graphischen Benutzeroberfläche eine Auswahl zu treffen oder eine Funktion auszuführen.

Die Aktoren 4 weisen Elektronik auf, die die Steuersignale, die von dem Prozessor 1 kommen auswerten und in entsprechende Aktionen umsetzen. Bei der Anzeige 5 handelt es sich hier um einen Monitor, der auch für ein Navigationsgerät verwendet wird. Weitere Anzeigetechnologien sind hier verwendbar, wie z.B. ein Netzhautprojektor, ein stereoskopischer Bildschirm oder ein sogenannter Headup-Display, wobei die Windschutzscheibe dabei als Projektionsfläche verwendet wird. Bei einigen zu steuernden Geräten ist zusätzlich eine Sprachsteuerung möglich, jedoch sind Feineinstellungen durch ein haptisches Bedienelement einfacher und schneller zu realisieren.

In Figur 2 ist das erfindungsgemäße Verfahren dargestellt. In Verfahrensschritt 6 werden haptische Eingaben in elektrische Eingabesignale umgewandelt. In Verfahrensschritt 7 werden Beschleunigungs- und Drehratenmeßsensoren ihre Meßwerte abgeben, um dann in Verfahrensschritt 8 mittels dieser Meßwerte eine Korrektur der Eingabesignale, wie oben dargestellt, vornehmen zu können. In Verfahrensschritt 9 werden dann mittels der korrigierten Eingabesignale zu steuernde Geräte gesteuert.

In Figur 3 ist eine erfindungsgemäße Vorrichtung dargestellt, wobei die einzelnen Komponenten der erfindungsgemäßen Vorrichtung über einen Bus 15 verbunden sind. Alle an den Bus 15 angeschlossenen Komponenten weisen einen Buscontroller auf, der das Lesen und Schreiben auf den Bus 15 ermöglicht. Über Datenein-/-ausgänge sind ein Prozessor 10, eine Eingabevorrichtung 11, eine Sensorengruppe 12, Aktoren 13 und eine Anzeige 14 angeschlossen. Die Funktionsweise und das Zusammenspiel der einzelnen Komponenten ist dasselbe wie für die Komponenten, die in Figur 1 beschrieben wurden. Hier wird ein elektrisches Leitungssystem als Bus 15 verwendet. Alternativ sind jedoch ein optischer Bus und auch ein Funkbus möglich.

## Patentansprüche

1. Vorrichtung für manuelle Eingaben in einem Fahrzeug, wobei die Vorrichtung wenigstens eine Eingabevorrichtung (2, 11) aufweist, wobei die Eingabevorrichtung (2, 11) mit einem Prozessor (1, 10) mit Beschleunigungs- und/oder Drehratensensoren (3, 12) und mit wenigstens einem mittels der manuellen Eingaben von Prozessor der Vorrichtung zu steuerndem Gerät (4, 5, 13, 14) verbunden ist, wobei der Prozessor (1, 10) so ausgebildet ist, dass er Signale von der wenigstens einen Eingabevorrichtung (2, 11) in Abhängigkeit von Messwerten der Beschleunigungs- und/oder Drehratensensoren (3, 12) korrigiert, **dadurch gekennzeichnet, dass** der Prozessor (1, 10) so ausgebildet ist, dass er die Messwerte mit vorgegebenen Schwellwerten vergleicht und in Abhängigkeit, welcher Schwellwert überschritten wird, die Signale von der Eingabevorrichtung (2, 11) korrigiert.

2. Vorrichtung nach Anspruch 1, **dadurch gekennzeichnet, dass** die Eingabevorrichtung (2, 11) Bedienelemente aufweist, die auf Druck- und/oder Dreh- und/oder Führbewegungen reagieren.

3. Vorrichtung nach Anspruch 2, **dadurch gekennzeichnet, dass** die Vorrichtung einen Bus (15) zur Verbindung der Komponenten aufweist.

4. Verfahren zur Verarbeitung von manuellen Eingaben in einem Fahrzeug, wobei die manuellen Eingaben von einer Eingabevorrichtung (2, 11) aufgenommen und in Signale umgewandelt werden, wobei die Signale von einem Prozessor (1, 10) verarbeitet werden, wobei wenigstens ein mittels der manuellen Eingaben zu steuerndes Gerät (4, 5, 13, 14) von dem Prozessor (1, 10) in Abhängigkeit von den Signalen der Eingabevorrichtung (2, 11) gesteuert wird, wobei die Signale in Abhängigkeit von Messwerten von Beschleunigungs- und/oder Drehratensensoren (3, 12) durch den Prozessor (1, 10) korrigiert werden, **dadurch gekennzeichnet, dass** die Messwerte von dem Prozessor (1, 10) mit Schwellwerten verglichen werden und in Abhängigkeit, welcher Schwellwert von den Messwerten überschritten wird, die Signale von der Eingabevorrichtung (2, 11) korrigiert werden.

## Claims

1. Device for making manual inputs in a vehicle, wherein the device has at least one input device (2, 11), wherein the input device (2, 11) is connected to a processor (1, 10) with acceleration and/or rotational speed sensors (3, 12) and with at least one apparatus (4, 5, 13, 14) which can be controlled by the processor of the device by means of the manual inputs, wherein the processor (1, 10) is embodied in such a way that it corrects signals from the at least one input device (2, 11) as a function of measured values of the acceleration and/or rotational speed sensors (3, 12), **characterized in that** the processor (1, 10) is embodied in such a way that it compares the measured values with predefined threshold values and corrects the signals from the input device (2, 11) depending on which threshold value is exceeded.

2. Device according to Claim 1, **characterized in that** the input device (2, 11) has operator control elements which react to pressing movements and/or rotational movements and/or guiding movements.

3. Device according to Claim 2, **characterized in that** the device has a bus (15) for connecting the components.

4. Method for processing manual inputs in a vehicle, wherein the manual inputs are received by an input device (2, 11) and converted into signals, wherein the signals are processed by a processor (1, 10), wherein at least one apparatus (4, 5, 13, 14) which is to be controlled by means of the manual inputs is controlled by the processor (1, 10) as a function of the signals of the input device (2, 11), wherein the signals are corrected as a function of measured values of acceleration and/or rotational speed sensors (3, 12) by the processor (1, 10), **characterized in that** the measured values are compared with threshold values by the processor (1, 10) and the signals are corrected by the input device (2, 11) depending on which threshold value is exceeded by the measured values.

## Revendications

1. Dispositif d'entrée manuelle de données dans un véhicule, ce dispositif ayant au moins un dispositif d'entrée (2, 11), le dispositif d'entrée (2, 11) étant relié à un processeur (1, 10), à des capteurs d'accélération et/ou de vitesse de rotation (3, 12) et à au moins un appareil (4, 5, 13, 14) à commander par le processeur à l'aide au moins des entrées manuelles,
le processeur (1, 10) étant réalisé pour corriger les signaux d'au moins un dispositif d'entrée (2, 11) en fonction des valeurs de mesure des capteurs d'accélération et/ou de vitesse de rotation (3, 12),
**caractérisé en ce que**
le processeur (1, 10) est réalisé pour comparer les valeurs de mesure à des seuils prédéfinis et en fonction du seuil qui est dépassé, le dispositif d'entrée (2, 11) corrige les signaux.

2. Dispositif selon la revendication 1,
**caractérisé en ce que**
le dispositif d'entrée (2, 11) comporte des éléments de commande réagissant à la pression et/ou à la rotation et/ou à des mouvements de guidage.

3. Dispositif selon la revendication 2,
**caractérisé en ce qu'**
il comporte un bus (15) pour relier les composants.

4. Procédé de traitement d'entrée de données manuelle dans un véhicule selon lequel les entrées manuelles sont reçues par un dispositif d'entrée (2, 11) pour être converties en des signaux,
les signaux étant traités par un processeur (1, 10) et au moins un appareil (4, 5, 13, 14) à commander à l'aide des entrées manuelles, est commandé par le processeur (1, 10) en fonction des signaux du dispositif d'entrée (2, 11),
les signaux étant corrigés en fonction des valeurs de mesure des capteurs d'accélération et/ou vitesse de rotation (3, 12) par le processeur (1, 10),
**caractérisé en ce que**
les valeurs de mesure sont comparées par le processeur (1, 10) à des seuils et en fonction des valeurs de mesure qui dépassent les seuils, le dispositif d'entrée (2, 11) corrige les signaux.
